# EUROPÄISCHE PATENTANMELDUNG

(11) **EP 0 731 584 A2**
(43) Veröffentlichungstag der Anmeldung: **11.09.1996**
(21) Anmeldenummer: 96102807.3
(22) Anmeldetag: 24.02.1996
(51) Int. Cl.: H04L 25/02, H04L 7/02, H04J 3/07

(54) **Verfahren zum Übertragen von digitalen Nutzdaten**

(30) Priorität: 02.03.1995 DE 19507170
(71) Anmelder: ROBERT BOSCH GMBH, 70442 Stuttgart (DE)
(72) Erfinder: Binder, Jann, Dr.-Ing., D-71546 Aspach (DE)

(57) **Zusammenfassung**

Es wird ein Verfahren zum Übertragen von digitalen Nutzdaten mit vorgegebenem Nutzdatentakt (T1) vorgeschlagen, bei dem die Übertragung mit einem Takt erfolgt, der vom Nutzdatentakt (T1) abweicht.

Um aufwendige Taktanpassungsmaßnahmen entbehrlich zu machen, erfolgt eine Überabtastung der Nutzdaten mit dem Takt (T2) für die Übertragung. Die empfangsseitige Rückgewinnung des Nutzdatentaktes (T1) läßt sich aufwandsarm realisieren.

## Beschreibung

Die Erfindung betrifft ein Verfahren nach dem Oberbegriff des Patentanspruchs 1.

### Stand der Technik

Es ist bekannt, Nutzdaten mit vorgegebenem Nutzdatentakt in ein Übertragungssytem einzubinden, das einen abweichenden Systemtakt aufweist. In ANT Nachrichtentechnische Berichte, Heft 9, 1992, Seiten 20 bis 29 ("Synchrone Multiplexeinrichtungen für die untere Netzebene") oder Seiten 30 bis 43 ("Synchrone Leitungsausrüstung") werden Taktanpassungsmaßnahmen für diesen Zweck beschrieben. So wird dort beispielsweise ein plesiochrones 140 MBit/s-Signal in einen C4-Container der synchronen digitalen Hierarchie(SDH) "gemappt" unter Anpassung an den Systemtakt von 155,52 MBit/s und Bildung eines entsprechenden Pointers. Der Pointer zeigt die Datenposition im Container an. Empfangsseitig werden die Nutzdaten dem Container entnommen. Die Taktanpassung könnte auch durch eine Stopfmultiplexer oder Transmultiplexer vorgenommen werden.

### Vorteile der Erfindung

Mit den kennzeichnenden Maßnahmen des Patentanspruchs 1 läßt sich eine Datenübertragung mit einem vom Nutzdatentakt abweichenden Fremdtakt erreichen, ohne daß aufwendige Taktanpassungsmaßnahmen notwendig sind, wie z.B. Stopfen, Pointerbildung, Einbinden der Nutzdaten in vorgegebene Übertragungsrahmen und entsprechenden empfangsseitigen Maßnahmen. Weiterbildungen des Verfahrens sind in den Unteransprüchen aufgezeigt. Eine vorteilhafte Anwendung des erfindungsgemäßen Verfahrens enthält Anspruch 10.

Bei Signalverzerrungen auf der Übertragungsstrecke kann bei Anwendung der Maßnahmen nach der Erfindung ein herkömmlicher Regenerator, der mit dem Übertragungstakt arbeitet, die Signalqualität erhöhen. Die Wiedergewinnung des Nutzdatentaktes ist ohne großen Hardwareaufwand möglich. Interaktive Servicedaten (IS), wie z.B. herkömmlicher Telekomdienst und neue digitale Datendienste, eines ANS-Systems (Access Network System) lassen sich ohne großen Aufwand in einem digitalen Glasfaser-Anschlußsystem mit abweichendem Takt, z.B. dem unter dem Warenzeichen DIAMANT bekannten digitalen Verteilsystem (Taschenbuch der Telecom Praxis 1994, Herausgeber Bernd Seiler, Schiele & Schöhn Verlag, Berlin, Seiten 150 bis 171) übertragen.

Mehrere überabgetastete Nutzsignale lassen sich auf einfache Weise zu einem gemeinsamen Datenstrom multiplexen und z.B. über ein Glasfasernetz übertragen. Die empfangsseitige Regeneration des Nutzdatentakts ist auch bei Signalverzerrungen auf der Übertragungsstrecke mit einem herkömmlichen Regenerator ohne Schwierigkeiten möglich. Daten mit niedriger Bitwertigkeit lassen sich ohne merkliche Qualitätseinbußen durch eine Rahmenkennung und/oder weitere Nutzdaten ersetzen.

### Zeichnungen

Ausführungsbeispiele der Erfindung sind in den Figuren 1 bis 6 dargestellt. Es zeigen
Figur 1 ein Blockschaltbild zum Durchführen des Verfahrens nach der Erfindung,
Figur 2 ein ähnliches Blockschaltbild mit Zusammenfassung mehrerer Datenströme,
Figur 3 ein Nutzdatensignal mit den Abtastzeitpunkten des Nutzdatentaktes und des Fremdtaktes,
Figur 4 ein Augendiagramm des übertragenen Nutzsignals, aufgezeichnet über Vielfachen des sendeseitigen Taktes T1,
Figur 5 das empfangsseitig regenerierte Signal,
Figur 6 das Prinzip der Übertragung von STM-1-Daten in einem Videosignal-Verteilsystem,
Figur 7 die periodische Abtastung des Spektrums durch Abtastung des Zeitsignals,
Figur 8 Spektren der Signale nach der Taktrückgewinnung und
Figur 9 ein gemessenes Spektrum

### Beschreibung der Erfindung

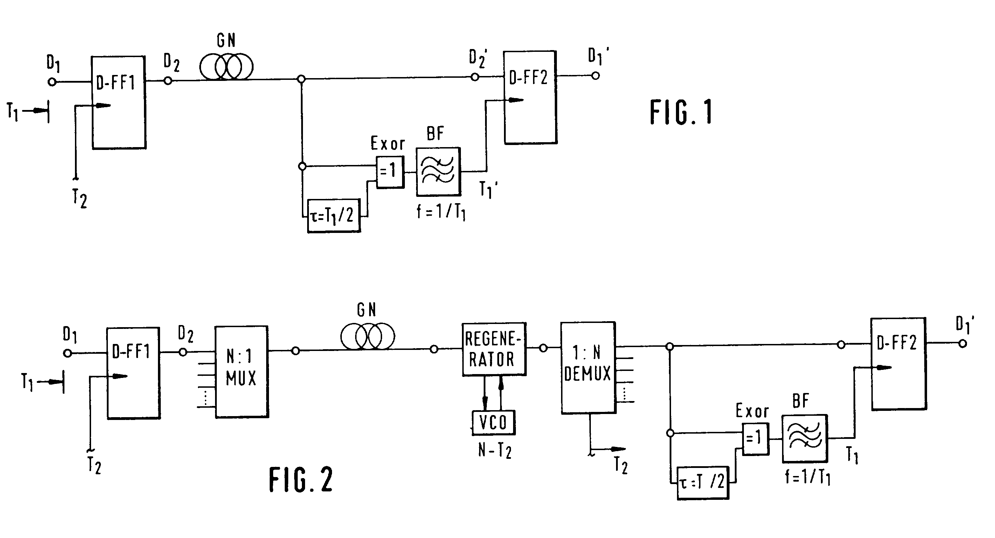

In Figur 1 werden zu übertragende Nutzdaten am Punkt D1 zugeführt. Der Nutzdatentakt und dessen Periodendauer ist mit T1 bezeichnet. Die Nutzdaten werden mittels eines D-Flip-Flops D-FF1 überabgetastet und zwar mit einem teilerfremden Fremdtakt T2, am Takteingang des D-Flip-Flops D-FF1 anliegt. Für dieser Überabtastung wird folgende Bedingung eingehalten: Die Taktfrequenz des Fremdtaktes T2 wird größer als die Taktfrequenz des Nutzdatentaktes T1 gewählt. Die praktische Realisierung ist vereinfacht, wenn der Fremdtakt T2 und der Nutzdatentakt T1 teilerfremd sind, d.h. das Verhältnis von T2 zu T1 sollte nicht exakt n/k sein, wobei n und k ganze Zahlen kleiner 10 und n größer k ist. Als Fremdtakt T2 wird vorteilhafterweise der Systemtakt für die Übertragung oder ein ganzzahliger Teiler hiervon gewählt, z.B. 226 MBit/s. Der Nutzdatentakt T1 beträgt beispielsweise 155,25 MBit/s, insbesondere, wenn die zu übertragenden Nutzsignale interaktive Breitbanddienste sind, die über ein Zubringer- und/oder Verteilnetz für digitalisierte TV-Signale übertragen werden sollen.

Das überabgetastete Nutzsignal kann nach entsprechender elektrooptischer Wandlung über ein Glasfasernetz GN übertragen werden. Auf der Empfängerseite, d.h. an den Enden des bedarfsweise verzweigten Glasfasernetzes GN, erfolgt eine Regenerierung des Nuztdatentaktes T1, der für die Weiterverarbeitung des Nutzdatensignals notwendig ist. Wenn für die Überabtastung vorgenannte Bedingungen eingehalten werden, kann die Regeneration des Nutzdatentaktes T1 auch bei Störungen auf der Übertragungsstrecke auf einfache Weise mit bekannten Regeneratorstrukturen erfolgen. Die Rückgewinnung des Nutzdatentaktes vereinfacht sich, wenn die Taktfrequenzen T2 und T1 teilerfremd sind. Die Flanken des Nutzdatensignals D2' (also am Ende der Übertragungsstrecke) müssen kürzer als T2 - T1 sein. Dies kann jedoch einfach gewährleistet werden dadurch, daß das übertragene Signal mit herkömmlichen Regenerationsschaltungen zeitlich regeneriert wird und die Regenerationsschaltung selbst eine steilflankige Ausgangstreiberschaltung besitzt. Als Beispiel ist in Figur 1 zur Rückgewinnung des Nutzdatentaktes T1 eine Exor-Verknüpfungsschaltung vorgesehen, der das überabgetastete Nutzdatensignal einmal direkt und einmal um eine halbe Taktperiode T1/2 verzögert bezüglich des Nutzdatentaktes T1 zugeführt wird. An die Exor-Verknüpfungsschaltung schließt sich ein Bandpaßfilter BF an, dessen Durchlaßbereich so gewählt ist, daß an seinem Ausgang der zurückgewonnene Nutzdatentakt T1 erscheint (Mittenfrequenz bei f=1/T1). Mit diesem zurückgewonnenen Nutzdatentakt T1 wird ein D-Flip-Flop D-FF2 getaktet, das aus dem zugeführten geringfügig überabgetasteten und deshalb bezüglich T1 mit Jitter behafteten Übertragungssignal das ursprüngliche bezüglich T1 unverjitterte Nutzdatensignal (Ausgang D1') regeneriert.

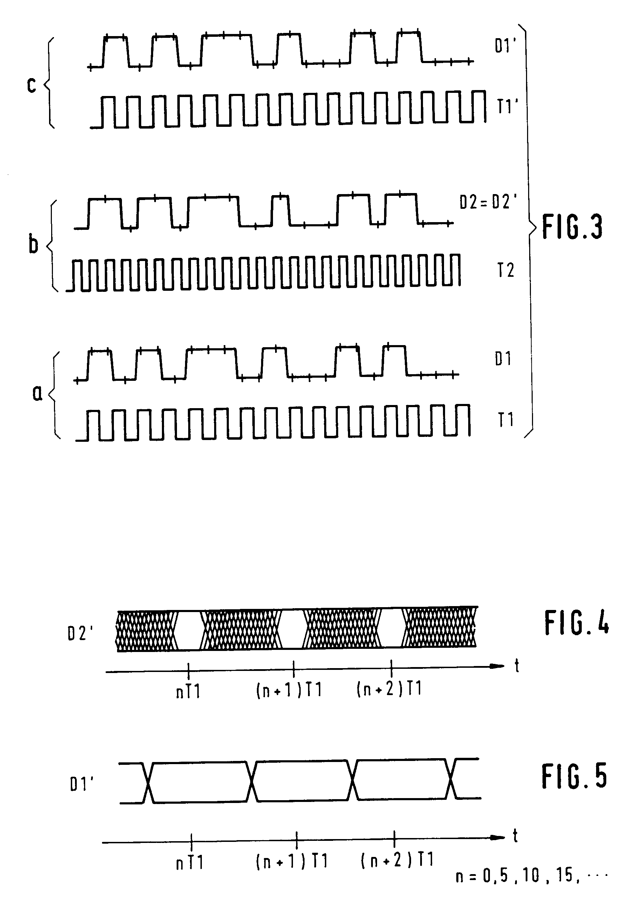

Durch die Überabtastung sind auf der Übertragungsstrecke drei verschiedene Taktinformationen vorhanden: T2, T1 und T2 - T1. Figur 3a zeigt ein Nutzdatensignal D1. Die Taktfrequenz T1 von 155,52 MHz ist direkt darunter dargestellt. Mit jeder positiven Taktflanke von T1 beginnt ein neues Bit von D1. Figur 3b zeigt den Systemtakt T2. Die Abtastzeitpunkte für D1 bezüglich T2 sind im Signalzug D1 markiert. Man erkennt, daß manche Bits einfach, andere mehrfach abgetastet werden. Das Resultat dieser Abtastung ist das Datensignal D2 mit der Datenrate D2 in Figur 3b. Im Signal D2 ist außer der Taktinformation T2 auch die Taktinformation T1 vorhanden. Diese kann z.B. mit der besprochenen Exor-Schaltung und einem Filter zurückgewonnen werden. Der wiedergewonnene Takt T1' ist in Figur 3c gezeichnet. Mit seiner positiven Flanke übernimmt das D-FF2 Flip-Flop aus Figur 1 oder 2 die Amplitudeninformation von D2 in Figur 3b. Die entsprechenden Abtastzeitpunkte sind in Figur 3b gekennzeichnet. Das Resultat ist das zurückgewonnene Nutzsignal D1', das bezüglich des Ausgangssignal D1 lediglich zeitversetzt ist.

Figur 4 zeigt das jitterbehaftete Auge am Eingang des D-Flip-Flops D-FFF2. Der Jitter entsteht virtuell dadurch, daß D2' synchron zum Takt T1 betrachtet wird. Voraussetzung für ein offenes Auge trotz Jitter ist eine gute Flankensteilheit von D2'. Diese läßt sich durch entsprechende Elektronik problemlos erreichen; insbesondere auch im Fall von Figur 2, in dem die Datenrate auf der Übertragungsstrecke ein Vielfaches von D2 ist. Das Signal am Ausgang des D-Flip-Flops D-FF2 nach der Abtastung mit T1' ist in Figur 5 dargestellt.

Figur 2 zeigt eine Weiterbildung des Ausführungsbeispiels gemäß Figur 1. Im Unterschied zu Figur 1 sind nun mehrere überabgetastete Nutzsignale zu einem gemeinsamen Datenstrom gemultiplext. Mehrere vorzugsweise mittels D-Flip-Flops überabgetastete Nutzdatensignale werden einem N:1-Multiplexer MUX zugeführt und als gemeinsamer Datenstrom übertragen. N ist hierbei ein ganzzahliges Vielfaches des Übertragungstaktes T2. Werden die zur genannten Taktraten verwendet, so ist bei einer Übertragungsrate im Übertragungssystem von beispielsweise 5,46 GBit/s N = 24. Vor dem empfangsseitigen 1:N-Demultiplexer DMUX befindet sich bei der Ausgestaltung nach Figur 2 ein Regenerator für die Taktrate N x T2, hier für den 5,46 GBit/s-Übertragungstakt des Datenstroms. Mit diesem herkömmlichen Regenerator wird Jitter beseitigt, der auf der Übertragungsstrecke entsteht. Der Regenerator und nachfolgende Demultiplexer gewährleisten hohe Flankensteilheit der Ausgangssignale, wie oben gefordert wurde. Damit ist diese Konfiguration sehr geeignet für die Übertragung von Nutzdaten mit geringer Überabtastung. Die sich an den Demultiplexer DMUX anschließende Weiterverarbeitung kann entsprechend zu Figur 1 erfolgen.

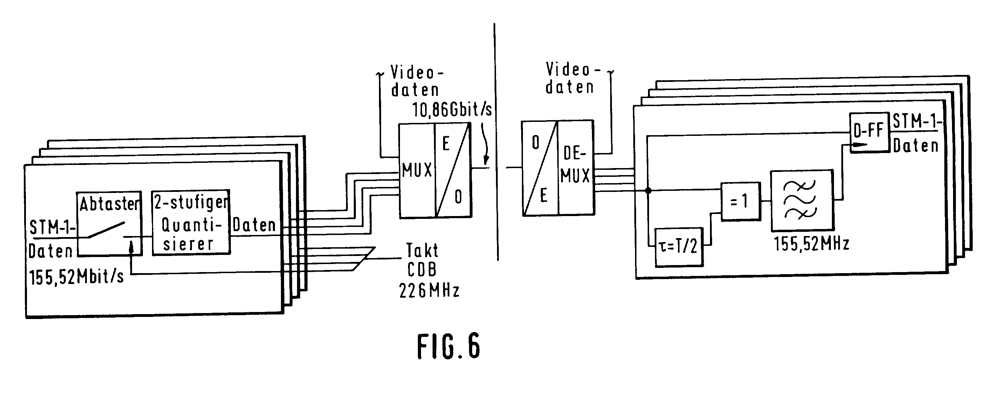

Figur 6 zeigt das Prinzip der Übertragung von STM-1-Daten, beispielsweise eines ANS-Systems (Access Network System), wie interaktive (IS) Daten über ein Verteilnetz für Videodaten mit anderem Übertragungstakt, z.B. dem zuvor erwähnten DIAMANT-System. Der Überabtastungstakt für die STM-1-Daten ist hier mit CDB bezeichnet. Die Taktrate von CDB kann z.B. 226 MHz sein. Nach dem Abtaster kann ein zweistufiger Quantisierer günstig sein.

Durch die zuvor erwähnte Erhöhung der Signalqualität bei der Regeneration und der Tatsache, daß die Nutzdaten normalerweise redundanzbehaftet sind, z.B. Videosignale, können jene Teildaten, die eine niedrige Bitwertigkeit aufweisen - LSB-Daten (Lowest Significant Bits)- durch Zusatzinformationen, wie z.B. Rahmenkennung, weitere Nutzdaten, ohne merkliche Qualitätseinbußen ersetzt werden. Diese Maßnahme ist dann besonders günstig und ohne Zusatzaufwand realisierbar, wenn die Teildaten, aus denen sich das Nutzsignal zusammensetzt, sowieso nach der Bitwertigkeit geordnet sind, z.B. wenn analoge Bildsignale A/D-gewandelt werden, liegen die parallelen Ausgangsbitströme sowieso nach der Bitwertigkeit geordnet vor. Nähere Ausführungen zu einem Ersatz niedrigwertiger Teildaten enthält die Patentanmeldung P 44 15 288.4

Nachfolgend wird erläutert, aus welchen Gründen im Signal D2 beziehungsweise D2' noch der Takt T1 vorhanden ist. Dabei wurden folgende Systemdaten zugrundegelegt: 30 Mbit/s Nutzsignal, 72 Mhz Abtastfrequenz und 20 : 1 Multiplex auf 1,4 Gbit/s Übertragungsrate.
Wesentlich ist, daß die Übertragungsrate asynchron zur Nutzdatenrate sein darf und Stopfbits zur Taktanpassung nicht notwendig sind.

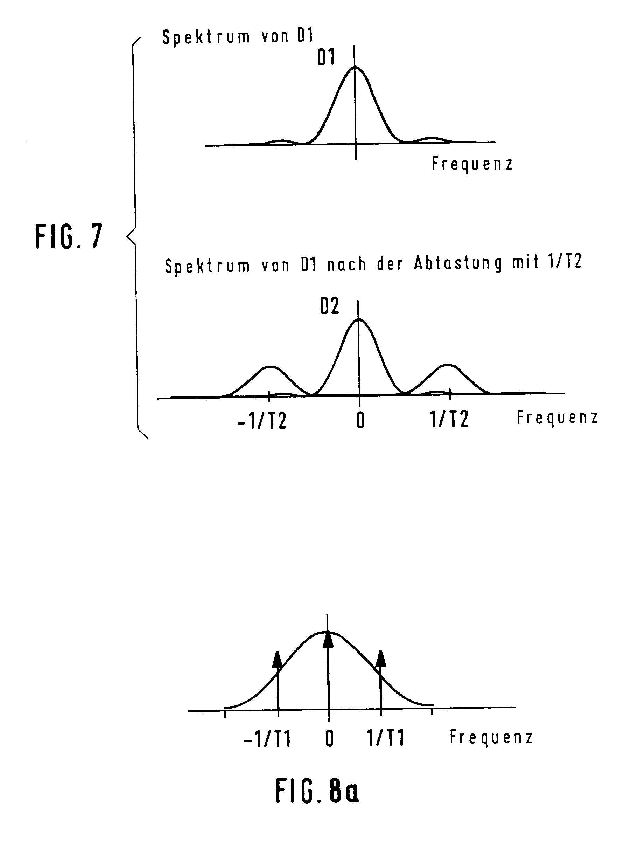

Bei der Abtastung des Signals D1 mit dem Takt T2 entsteht im Spektralbereich eine periodische Wiederholung des Spektrums von D1 (Figur 7). Aus Stremler (Introduction to Comunication Systems 2nd Edition, Addison-Wesley Publishing Company, Reading, USA, Seiten 122-129) ist anhand eines allgemeinen analogen Signals, Figur 3.21(a), und dessen Spektrum, Figur 3.21(b), der Effekt der periodischen Wiederholung in Figur 3.21(f) dargestellt. Das periodisch wiederholte Spektrum ist mit einer Hüllkurve bewertet, die von der Charakteristik des Abtasters abhängt. Die erste Nullstelle der Hüllkurve ist bei Stremler in Figur 3.21(d) und Figur 3.21(f) zum Beispiel bei 3 ω₀ gezeichnet. Die periodisch wiederholten Spektralanteile sind nur bei der Abtastung mit einem idealen Diracstoß gleich groß wie das Grundspektrum.

Für das System gemäß Figur 1 wird nicht mit einem idealen Abtaster, sondern mit dem Flip-Flop D-FF1 mit der Abtastfrequenz 1/T2 gearbeitet. Bei Digitalsignalen verhält sich ein Flip-Flop wie ein S/H (Sample and Hold)-Glied. Die Wiederholspektren sind aufgrund der Abtastfrequenz zentriert um ...-1/T2, 0, 1/T2, 2/T2... (Figur 7) . Durch die S/H-Funktion entsteht weiterhin eine Nullstelle bei 1/T2, wodurch die Wiederholspektren in ihrer Amplitude reduziert werden.

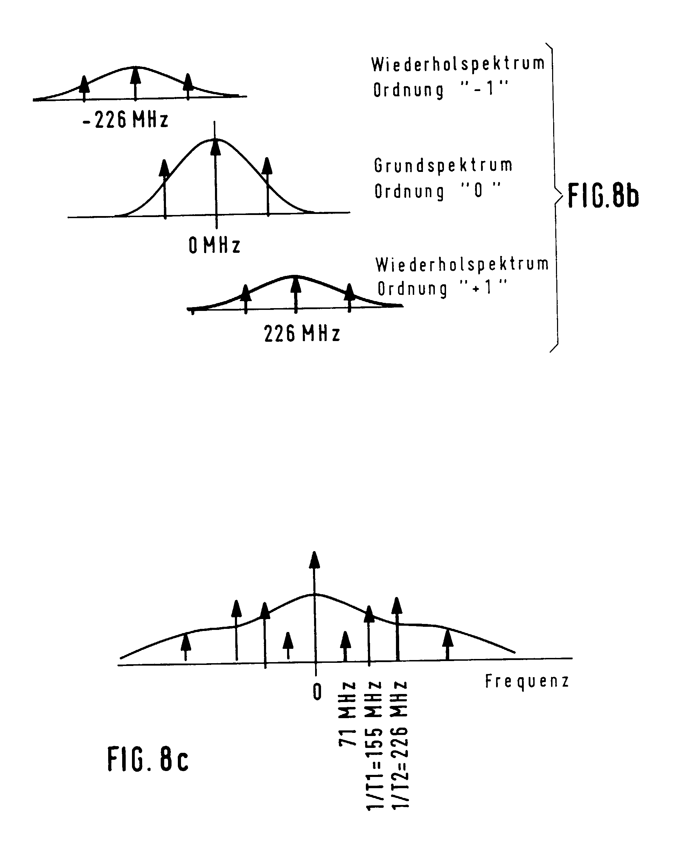

Im Hauptspektrum von D2 und die Frequenz f=0 ist noch die gesamte Information des Datensignals D1 vorhanden. Damit muß es aber auch möglich sein, aus dem Spektrum D2 mit einer Taktrückgewinnungsschaltung den Takt T1 zu erzeugen. In Figur 8 ist das Ausgangsspektrum nach der EXOR-Funktion skizziert, im Fall (a) bei unverändertem D1 als Eingangssignal des EXOR-Gatters und im Fall c) bei abgetastetem D1, das heißt also, für D2 als Eingangssignal des EXOR-Gatters. Es entstehen zusätzliche Taktlinien im Fall Figur 8(c). Wie zu erwarten, ist sowohl die Linie der Abtastfrequenz 1/T2 (226 Mhz) vorhanden, aber auch die Linie 1/T1 (155 Mhz) sowie Summen und Differenzen (226 - 155 = 71 Mhz, etc.) aus diesen Linien. Die Einzelspektren hierzu sind in Figur 8(b) dargestellt.

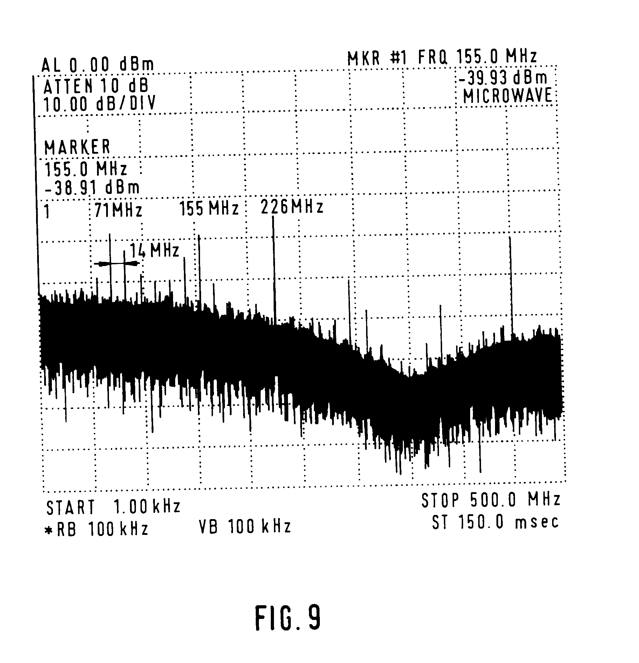

Figur 9 zeigt das Ergebnis einer Messung des Spektrums am Ausgang des EXOR-Gatters für ein Datensignal D1 mit 155 Mbit/s, das über ein D-FF mit einer Frequenz von 226 Mhz abgetastet wurde. Die differentielle Leitungslänge für die Signale an den beiden Eingängen des EXORS war 60 cm entsprechend etwa 2,8 nsec zeitlicher Verzögerung. Die Versuchsanordnung entspricht der in Figur 1 gezeigten Schaltung. Neben den verschiedenen Taktlinien ist eine Nullstelle im Spektrum sichtbar, die sich aufgrund der Länge des Delays τ (Figur 2) bei der Frequenz 1/τ ergibt. Bei der Taktfrequenz 1/T1 = 155 Mhz ist deutlich die gesuchte Taktlinie des ursprünglichen Datensignals D1 zu erkennen. Sie kann durch ein übliches Taktfilter mit einer Durchlaßfrequenz von 155 Mhz aus dem Spektrum herausgefiltert werden.

## Patentansprüche

1. Verfahren zum Übertragen von digitalen Nutzdaten mit einem vorgegebenen Nutzdatentakt (T1), dadurch gekennzeichnet, daß das Nutzdatensignal für die Übertragung mit einem Fremdtakt (T2) überabgetastet wird, dessen Taktfrequenz größer als die Taktfrequenz des Nutzdatentaktes (T1) ist.

2. Verfahren nach Anspruch 1, dadurch gekennzeichnet, daß die Taktfrequenz des Nutzdatentaktes kleiner als das Doppelte der Taktfrequenz des Nutzdatentaktes (T1) ist.

3. Verfahren nach Anspruch 1 oder 2, dadurch gekennzeichnet, daß der Fremdtakt (T2) teilerfremd zum Nutzdatentakt (T1) ist.

4. Verfahren nach Anspruch 1, dadurch gekennzeichnet, daß zur Übertragung mehrere überabgetastete Nutzsignale zu einem gemeinsamen Datenstrom gemultiplext werden.

5. Verfahren nach einem der Ansprüche 1 bis 4, dadurch gekennzeichnet, daß als Fremdtakt (T2) der Systemtakt eines Übertragungsnetzes verwendet wird.

6. Verfahren nach einem der Ansprüche 1 bis 5, dadurch gekennzeichnet, daß die nach dem Prinzip der Überabtastung eingebundenen Nutzdaten mit anderen Daten, die synchron zum Systemtakt sind, zu einem gemeinsamen Datenstrom mit dem Systemtakt (N x T2) gemultiplext werden.

7. Verfahren nach einem der Ansprüche 1 bis 6, dadurch gekennzeichnet, daß zur empfangsseitigen Regeneration des Nutzdatentaktes (T1) das überabgetastete übertragene Nutzdatensignal zusammen mit einem um eine halbe Taktperiode bezüglich des Nutzdatentaktes (T1) verzögerten überabgetasteten Signals einer Exor-Verknüpfung unterzogen wird und daß das dieser Verknüpfung unterzogene Signal anschließend bandpaßgefiltert (BF) wird, mit einem Durchlaßbereich in der Umgebung des ursprünglichen Nutzdatentaktes (T1).

8. Verfahren nach einem der Ansprüche 1 bis 7, dadurch gekennzeichnet, daß zunächst eine herkömmliche empfangsseitige Regeneration mit dem Fremdtakt (T2) oder Systemtakt (N x T2) vorgenommen wird, um die überabgetasteten Daten und/oder Übertragungsdaten zeitlich und/oder amplitudenmäßig zu regenerieren.

9. Verfahren nach einem der Ansprüche 1 bis 8, dadurch gekennzeichnet, daß bei den Nutzdaten jene Teildaten, die eine niedrige Bitwertigkeit aufweisen, durch eine Rahmenkennung und/oder weitere Nutzdaten ersetzt werden.

10. Verfahren nach einem der Ansprüche 1 bis 9, dadurch gekennzeichnet, daß der Nutzdatentakt (T1) zu 155,52 MBit/s und der Fremdtakt/Systemtakt (T2) zu 226 MBit/s gewählt wird.

11. Verfahren nach einem der Ansprüche 4 bis 10, dadurch gekennzeichnet, daß die Übertragung des gemeinsamen Datenstromes mit einer Bitrate von 5,46 GBit/s oder ganzzahligen Vielfachen hiervon vorgenommen wird.

12. Anwendung des Verfahrens nach einem der Ansprüche 1 bis 11 in einem digitalen optischen Zubringer - und/oder Verteilsystem, insbesondere für Fernseh-, Rundfunk- und/oder interaktive Dienste.
